# EUROPEAN PATENT APPLICATION

(11) **EP 1 345 156 A1**
(43) Date of publication of application: **17.09.2003**
(21) Application number: 02290662.2
(22) Date of filing: 15.03.2002
(51) Int. Cl.: G06K 7/10, G06K 19/07, G06K 19/04, G11B 7/00

(54) **Integrated circuit card**

(71) Applicant: Bergot, Matthieu, 75016 Paris (FR)
(72) Inventor: Bergot, Matthieu, 75016 Paris (FR)
(74) Representative: Cabinet Hirsch

(57) **Abstract**

A chip card (2) has a support (4) with an embedded chip (6); a source (10) of energy is connected to the chip for energising the chip. An electro-optic converter (24) receives electric signals from the chip and converts these signals to optical signals readable by an optical drive. An opto-electronic converter (26) receives optical signals from an optical drive and supplies electric signals to the chip. Contacts (8) may also be provided for allowing the card to be used in an IC-card drive. The card may be read in a standard IC-card, but also in an optical drive such as a CD-ROM reader.

## Description

The invention relates to the field of integrated circuit cards and more specifically to the problem of reading and writing onto said cards.

Integrated circuit cards (IC cards), also called chip cards, are defined in a number of standards, regarding notably the dimensions of the card, location and features of the chip on the card. See for instance ISO 7816-1, ISO 7816-2, ISO 7816-3, ISO 7816-4, ISO 7816-5, ISO 7816-6.. These cards are used, among other purposes, as SIM cards, credit card, PKCS/RSA cards or prepaid telephone card.

IEC standard 14443 (A and B modes) discloses contactless operation for IC-cards. The card as well as the drive comprises a flat coil. Both coils are coupled when the card is correctly positioned within the drive.

A limit to the use of IC cards is the need for a specific reader, which cost and complexity of installation notably limits a large business or domestic use of the cards. A number of solutions were suggested for overcoming this problem. Thus, EP-A-0 696 010 and the art cited in this document disclose a number of interfaces for reading IC cards in a PCMCIA-card reader. This solution still requires a specific interface for reading the IC card.

Apart from this problem, it was suggested to use CD-ROMs having the outside shape of a visit card. So-called CD-cards or e-Cards are actual CD-ROMs readable in a CD-ROM drive, but having a rectangular outer shape and printed on one side with human-readable information. In view of this product, a number of CD-ROM drives now sold on the market are adapted to receiving and reading non-circular CD-ROMs.

Thus, there is a need for a solution allowing IC-cards to be read from and written to.

The invention, in an embodiment, provides a chip card, comprising a support with a chip, a source of energy connected to the chip, an electro-optic converter receiving electric signals from the chip, an opto-electronic converter supplying electric signals to the chip.

This makes it possible to read from and write to the chip card in an optical drive, of the type used for reading CD-ROMs in most existing computers.

The source of energy may be selected among the group of batteries, accumulators, supercondensators. It may be passive, e.g. may comprise a coil.

Preferably, the electro-optic converter has outputs on a surface of the card, and the opto-electronic converter has inputs on a surface of the card. The outputs of the electro-optic converter and the inputs of the opto-electronic converter may be on the same surface of the card.

The invention further provides a process for reading from such a card, comprising the steps of powering the chip and scanning an output of the electro-optic converter. The invention also provides a process for writing to such a card, comprising the steps of powering the chip and directing light to an input of the opto-electronic converter converter.

Last, the invention provides an optical drive, comprising a device for receiving a storage medium and a magnetic field source adapted to generate a magnetic field at the receiving device. The magnetic field source may comprise a permanent magnet or a source coil.

Other features and advantages of the invention will appear from the description of exemplary embodiments of the invention, given in reference to the drawings, where:
- figure 1 is a schematic view of a side of a card according to the invention;
- figure 2 is a schematic view of the other side of a card according to the invention;
- figure 3 is a schematic view of the various components of the card.

The invention suggests using a CD-ROM drive for reading from a chip card and writing thereto. CD-ROM drives are now extensively used - almost every new computer sold in the market being provided with an OEM CD-ROM reader. This makes it possible to use an IC card in a computer, without having to provide additional devices. The invention thus provides an almost unlimited number of IC card drives.

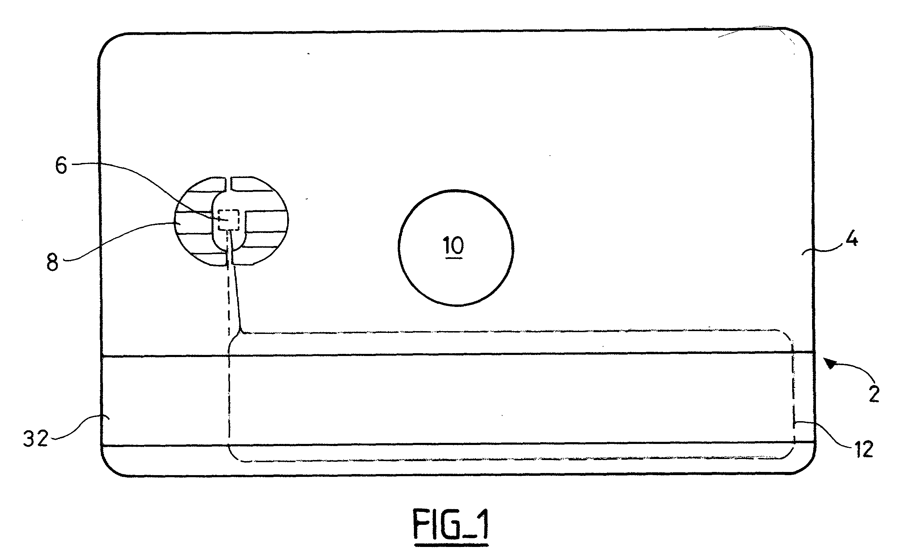

Figure 1 is a schematic view of one side of a chip card according to the invention. Card 2 has a support 4 with the outer shape complying with ISO 7816; or with any other proprietary standard defining the outer shape of the card. This makes it possible to read the card in a drive adapted for IC-cards. As will appear below, this is however not a requirement in case the card need not be usable in such drives. The support is made of a plastic material, or of any other material used in this field of the art. The card is also provided with a central opening 10, of the type allowing the card to be received in an optical drive.

Card 2 further has an embedded chip 6 with contacts 8. The position of the contact is as defined in the relevant standards. The contacts are located on side of the card, which is the side represented on figure 1. The contacts are used in case the card needs to be read in a standard IC-card drive. Again, this is preferred but not necessary for enabling the card to be used in a CD-ROM drive .

Card 2 further comprises a source of energy. This source of energy provides the necessary electrical power to chip 6 and to the converters discussed below, at least when the card is in use in an optical drive. The source of energy may be an active source of energy, such as a battery, an accumulator, a supercondensator or the like. In the case of an accumulator or of a supercondensator, the source of energy may be charged when the card is used in a standard drive, or using a specific charger.

The source of energy may also be a passive source, which only converts energy received from outside the card. One may use, as exemplified in the figures a coil 12, connected to the chip. When coil 12 is placed into a varying magnetic field, it provides a voltage at its ends. A variable magnetic field may be generated simply by rotating the card 2 in a drive, around the opening; if the drive is provided with a permanent magnet offset with respect to the axis of rotation of the card, the magnetic field across the coil varies when the coil is rotated in the drive. This solution has the advantage of not involving an additional source of magnetic field in the drive - a simple magnetic source being necessary. As a magnetic source, one may use a permanent magnet, but also a source coil located in the drive for generating a magnetic field across coil 12; using a source coil in the drive makes it possible to enable the source coil only when a card is detected. This limits magnetic fields in the optical drive. In addition, using a source coil in the drive makes it possible to generate a variable magnetic field across coil 12, even when coil 12 is located symmetrically in a rotation around opening 10 of the card. This increases the possible size of the coil and therefore increases voltage produced by coil 12 for a given amplitude of the magnetic field in the optical drive. Whether the drive has a permanent magnet or a source coil, a magnetic field is generated at the location of the card - that is at or through the tray or any other storage medium receiving device of the optical drive.

The source of energy may also be actuated by rotation of the card in a drive. This avoids the need of a magnetic field source in the optical drive, while still powering the chip in when the card is used in an optical drive.

As discussed above, the source of energy provides the necessary electrical power to chip 6 and to the converters discussed below, at least when the card is in use in an optical drive. When the card is used in an IC-card drive, contacts 8 of the chip are used for powering the chip 6, so that the source of energy is not necessary. The solution is also compatible with contactless cards drives; indeed the ability to be operated by a CD-drive is conceived as a "plug-in" functionality regarding existing cards. When the card is used in a regular contactless drive, the chip detects that it is not powered through contacts 8; in addition, the chip may detect the current provided through the magnetic field used in such drives; else, if the card is provided with a source of energy active upon rotation of the card, the chip may detect that this source is not powering it - this meaning that the card is not rotated. Use of one or several of these criterion allows the chip of the card to appreciate that the card is in use in a regular contactless drive. The chip may then behave as expected in such a drive.

When the card is used in an optical drive, the chip may detect rotation of the card thanks to the magnetic field it receives from the passive source of energy; in this respect, the power applied thanks to such a source is modulated with a frequency which is a function of the rotation speed of the card. Knowing the rotation speed in optical drives, this make it possible for the chip to identify that the card is being used in an optical drive. If the card is provided with a source of energy active upon rotation of the card, rotation of the card may be detected by the chip when it is powered through this specific source of energy. The chip may then behave as expected in such an optical drive.

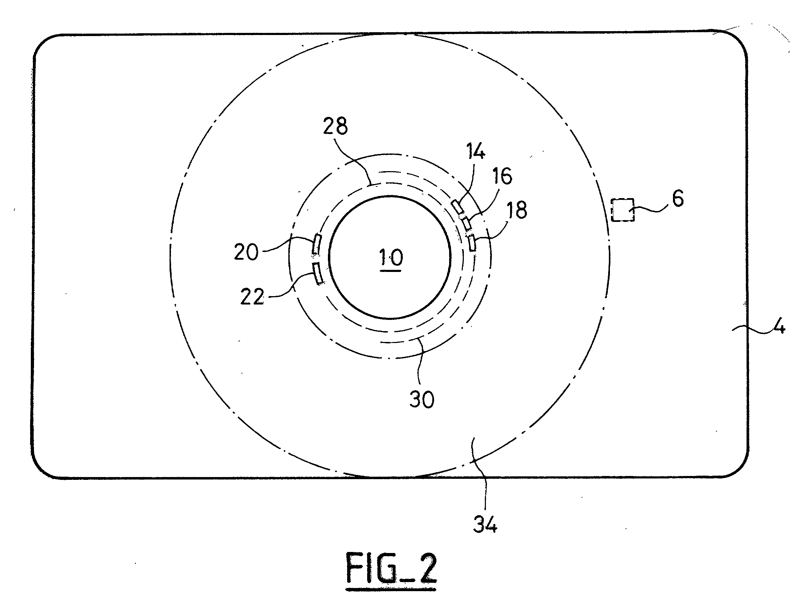

The card further comprises an electro-optical converter, connected to the chip. The electro-optical converter receives signals electrical signals from the chip and converts these signals to signal readable by the optical drive; more specifically, as shown on figure 2, one side of the card - in the example the side opposed to the contacts - has an electro-optical converter output. This output has two states depending on the input applied to the electro-optical converter; these states are detectable by the optical drive. Since the output of the electro-optical converter is on the side opposite to contacts 8, the card may be inserted in the optical drive in the usual manner - with the printed side on the top. The output of the electro-optical converter is then facing the reading laser of the optical device.

For the electro-optical converter, one may use any type of converter, inasmuch as
- the size of the converter is such that it may be embedded in the card;
- the output of the converter is readable by the optical reader of the drive.
The electro-optical converter may for instance comprise at least one liquid crystal cell; providing more than one cell make it possible to increase the transmission rate from the chip to the drive, should this prove useful; the optical reader of the drive would then detect the change in reflectivity when the cell is energised. There is no need to provide an additional light source in this case; the cell may however cover a reflecting surface. The electro-optical converter could also comprise at least one LED; the optical reader would then detect the change in luminance of the LED.

In this case the maximum bit rate for the transfer of information from the card to the drive is determined by
- the maximum linear speed of the optical drive;
- the linear density of LED outputs;
- the switching time of the LED outputs.
For instance, as the normal linear speed of a state of the art reader is 1,2 m/s, if the density of LEDs is of 1 per linear mm, the information bit rate will be 1,2 kbits/s, assuming the switching time of the LED is not a limiting factor; this is likely to be the case since a LED only has to switch (if necessary) in the time necessary for the card to turn over one full turn. Transfer rate may also depend on the encoding of the signals, and would be lower - ceteris paribus - if one uses a transitional encoding.

Figure 2 shows an example where the electro-optical converter has an output made of three LCD cells 14, 16 and 18 located on the same circular track of the card, near to the inner opening 10. The cells are connected to outputs of the chip for receiving the electric signals to be converted.

The card further comprises an opto-electrical converter, connected to the chip. The opto-electrical converter receives optical signals provided by the optical reader of the drive. The optical signals are converted into electrical signals transmitted to the chip; more specifically, as shown on figure 2, the same side of the card as the one having the output 14, 16, 18 of the electro-optical converter has the input to the opto-electrical converter. The side is the same inasmuch the same reading device is used for reading information from the electro-optical converter and for writing information to the opto-electrical converter.

For the opto-electrical converter, one may use any type of converter, inasmuch as
- the size of the converter is such that it may be embedded in the card;
- the light applied by the optical reader of the drive may be converted into electrical signals usable by the chip.
The opto-electrical converter may for instance comprise at least one CCD (charge coupled device), adapted to the light power expected in the optical drive. As for the output of the electro-optical converter, the number of devices may vary.

As for the electro-optic converter, the bit rate for transferring information from the optical drive to the chip of the card is directly connected with the linear density of the sensors used in the opto-electronic converter. For instance if the sensor linear density is of 1 per mm, and the if linear speed is 1,2 m/s, the transfer speed is 1,2 kbits/s. As above, transfer rate may depend on the encoding of the signals, and would be lower - ceteris paribus - if one uses a transitional encoding.

Figure 2 shows an example where the opto-electrical converter has an input made of two CCDs 20 and 22 located substantially at the same distance from the centre of the card. This means that the inputs are adjacent or substantially adjacent on the spiral track of a CD-ROM. Information may be provided to the chip by applying light to one or two of the devices 20 and 22. Having both inputs adjacent on the track makes it easy to maintain the light source over the two cells.

Having more that one input cell and more than one output cell makes it possible to increase the transfer rate to and from the card. However, it is sufficient that one output LED and one input sensor be provided. In this case, the way information can be exchanged can be implemented as following :
- output, from card to optical drive : the optical drive simply has to read the signal presented on the output of the electro-optic converter;
- input, from optical drive to card : the optical drive expresses answers to the output signals. Those answers are a modulation of the CD-Drive behaviour, after a signal of the card. For exemple, the response may constitute in the laser beam getting off for a certain period of time, may result from a change of speed, or change of radial position. This modulation or change is capted by the sensor forming the input to the opto-electrical converter. If the signal chosen is the modulation of the intensity of the laser beam (on/off for example), the optical drive device sends those signals to the sensor of the opto-electronic converter after the output signal is received. 1 can be coded as (output = 1, input = 1) and 0 as (output = 1, input = 0), the other positions (output = 0, input = 1) and (output = 0, input = 0) can be used for specific signals (no signal, start, end, etc.) Thus with just 1 input and 1 output ability in a single track, the chip card and the CD-drive device are able to process a protocol of communication. The information transmitted from the drive to the chip may be encoded in other ways, e.g. without having to consider the output of the electro-optic converter.

One may also decide to have both inputs at different distances from the centre of the disk. This may be of use where information is coded by a change between the light applied to one input and to the other input. Information would then simply be input to the opto-electrical converter by applying light to only one of the inputs. Having the inputs not adjacent on the spiral track followed by the beam makes it easier to apply light on one input and not to the other one.. Such a solution is advantageous, especially in case the card is provided with an active source of energy : indeed, it ensures that light applied simultaneously to both cells - e. g. when the card is exposed to day light - would not be misinterpreted as a signal to the chip. Other encoding schemes - e.g. transitional schemes - may be used for avoiding that day light may be misinterpreted as signals to the chip.

It is also advantageous to provide the input of the opto-electrical converter near to the output of the electro-optical converter. This makes it easier to read from the chip and to write to the chip, since a change from a read operation to a write operation does not involve an important change of position of the light source of the reader. In the example of figure 2, the inputs 20 and 22 to the opto-electronic converter are substantially located on a circle 28 and the outputs 14, 16 and 18 of the electro-optic converter are substantially located on another circle 30. When the beam of the optical drive follows the spiral track, it scans the inputs 20 and 22, and then the outputs 14, 16 and 18.

Both approaches, input and outputs at the same distance from the centre of the card or at different distances from the centre can be used in order to optimise the speed of information transfer according to a given protocol.

The description of the opto-electrical converter given above applies to an optical reader. This description shows that even where the intensity of the light source of the reading device - the reading laser of a CD-ROM drive - cannot be modulated, it is still possible to transmit information to the card. If the optical drive has embedded writing capabilities - e. g. a CD-RW drive - the change of intensity in the light provided by the light source may also be used for providing information to the opto-electrical converter. In this case the speed of the information transfer can be faster, since the modulation possibilities are more numerous.

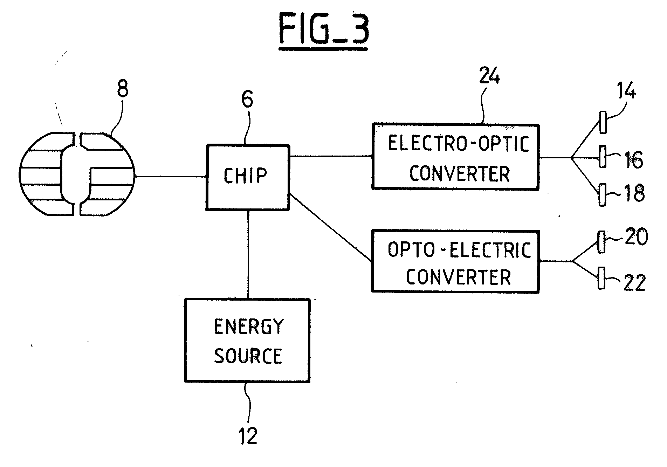

Figure 3 is a schematic view of the various components of the card. Chip 6 is connected to contacts 8, to electro-optic converter 24, to opto-electronic converter 26. Electro-optic converter 24 has outputs 14, 16 and 18. Opto-electronic converter has inputs 20, 22. In the example of figure 3, source of energy 10 is connected to chip 6 and the converters are powered through the chip.

The operation of the card of figures 1 and 2 is the following.

The card of figures 1 and 2 may be used in a standard IC-card drive. In this case, chip 6 is energised and read through contacts 8. When the chip detects power applied through contacts 8, it may adapted to disable its outputs connected to the electro-optical converter as well as its inputs connected to the opto-electrical converter. This ensures that these converters will not interrupt or hamper the operation of the chip. This disabling operation may even not be necessary where the converters are powered by a passive source of energy : they would not be powered in a standard IC-card drive. The card of figures 1 and 2 would thus behave in the drive exactly like a standard IC-card.

The same standard capability applies for contactless cards, when the card is out of the optical reader.

The card of figures 1 and 2 may also be used in an optical drive, such as a CD-ROM reader. The chip is then energised by the source of energy - be it passive or active - which also supplies necessary power to the converters. If the source is active, optical signals applied by the drive to the opto-electrical converter may indicate to the chip that it now stands in an optical drive and may be read from on written to through the converters. The chip may then react by providing signals to the electro-optical converter, thus allowing the drive to determine that the chip is responsive. One may thereafter use the same protocol as the one used when chips are powered through contacts 8.

If the source is passive, power is supplied to chip 8 when the card is rotated in the drive. This makes it possible for the chip to determine that it is in an optical drive. Again, the same protocol may be used for starting transmission with the drive.

For reading from the chip of card, the output of the electro-optic converter on the surface of the card is scanned by the optical drive. For writing to the chip of the card, the input of the opto-electronic converter is read - so that it receives light from the optical drive. This only makes it necessary to control the optical drive so as to read specific locations on what appears to the optical drive to be a usual CD-ROM. thus, reading and writing from and to the card does not change the usual operation of the optical drive. The chip may be read or written to by software controlling the drive. The optical drive need not be adapted for using the card of figures 1 and 2; it may possibly be necessary to provide the drive with an additional source of magnetic field, as discussed above, for energising the chip of the card thanks to coil 12.

The card may also be provided with a magnetic band and /or usual CD or DVD storage layer(s). Where there is only provided a magnetic band, this band may be located on any side of the card; one may use the same side as the contacts of the chip, or the other side like most standard bank cards sold nowadays. Where there is only provided usual CD or DVD layer(s), these are preferably provided so as to be readable from the side of the card opposed to the one having the chip contacts. This makes it possible to provide the layer over the full surface of the card - except for the surface needed for the electro-optic converter and for the opto-electronic converter - so as to increase the amount of data stored in the card. Where the card comprises a magnetic band as well as CD or DVD layer(s), the magnetic band and the chip contacts are preferably on one side of the card, while the CD or DVD layer(s) is readable from the other side of the card. However, the magnetic band can also be on a protection plastic film on the optical side of the card. In this way, the protection film would be removed when the card is used in an optical reader, but kept otherwise. In this configuration, in the case of a Visa card for example, if the plastic film is printed like a copy of a Visa card (front and back), it becomes possible to make the card apparently completely standard. This aspect is important since merchants are used the standard Visa cards. Figure 1 shows a magnetic band 32 on the same surface of the card as contacts 8, while figure 2 shows the possible location 32 of the storage layer.

Storing data in the card is particularly advantageous, since it may be used for providing the user of the card with the software necessary for reading the chip in the optical drive. Thus, at the time the card is inserted in the optical drive, the drive would start by reading the information stored on one the storage layer. If the card is used for the first time in the computer connected to the optical drive, the user may be warned that the software for reading the chip of the card is stored on the storage layer of the card, and should be executed for reading the chip of the card. This software may be executed by copying from the card into the RAM of the computer. It may also be copying to the permanent memory of the computer for further use. If the software for reading the chip of the card is already present in the computer, the card may be detected as having a chip at the time the storage layer is read by the optical drive. The user may be prompted to use the card as a chip card.

The invention is not limited to the embodiments disclosed above. Thus, reference is made to a CD-ROM reader, since this is currently the most widespread reader in the field. However, this is one example only of an optical drive; one may also use readers and/or writers for all CD standards - CD-ROM, CD-ROM XA, CD-R, CD-RW, Photo-CD, CD-i, CD+G, CD Text, Video CD. One may also use readers and / or writers for all DVD standards. Implementing the invention in a drive having writing capabilities makes it possible to use a less sensitive opto-electronic converter : indeed, the power of the laser used in a writer is usually higher than the power of the laser used in a mere reader.

In all this description, the ability to read from and write to the card makes it possible to execute programs imbedded in the chip. One of the most important advantage of the chip card is indeed their ability to store and operate secret keys, through RSA protocols for example, and operated through PKCS protocols between the container (the card) and the reader (e.g. the Personal Computer). Reading from and writing to the card notably makes it possible to use the card for authenticating purposes.

## Claims

1. A chip card (2), comprising :
- a support (4) with a chip (6);
- a source (10) of energy connected to the chip;
- an electro-optic converter (24) receiving electric signals from the chip;
- an opto-electronic converter (26) supplying electric signals to the chip.

2. The chip card of claim 1, wherein the source of energy is selected among the group of batteries, accumulators, supercondensators.

3. The chip card of claim 1, wherein the source of energy is passive.

4. The chip card of claim 3, wherein the source of energy comprises a coil (12).

5. The chip card of one of claims 1 to 4, wherein the electro-optic converter (24) has outputs (14, 16, 18) on a surface of the card.

6. The chip card of one of claims 1 to 5, wherein the opto-electronic converter (26) has inputs (20, 22) on a surface of the card.

7. The chip card of claim 5 and 6, wherein the outputs of the electro-optic converter and the inputs of the opto-electronic converter are on the same surface of the card.

8. A process for reading from a card according to one of claims 1 to 7, comprising the steps of
- powering the chip and
- scanning an output of the electro-optic converter (24).

9. A process for writing to a card according to one of claims 1 to 7, comprising the steps of
- powering the chip.
- directing light to an input of the opto-electronic converter converter (16).

10. An optical drive, comprising
- a device for receiving a storage medium;
- a magnetic field source adapted to generate a magnetic field at the device.

11. The drive of claim 10, wherein the magnetic field source comprises a permanent magnet.

12. The drive of claim 11, wherein the magnetic field source comprises a source coil.
